## Europäisches Patentamt

## European Patent Office

## Office européen des brevets

(11) Veröffentlichungsnummer: **0 104 190**
**B1**

(12) **EUROPÄISCHE PATENTSCHRIFT**

(45) Veröffentlichungstag der Patentschrift:
26.02.86

(21) Anmeldenummer: **83900924.8**

(22) Anmeldetag: **22.03.83**

(86) Internationale Anmeldenummer:
**PCT/EP 83/00083**

(87) Internationale Veröffentlichungsnummer:
**WO 83/03397 (13.10.83 Gazette 83/24)**

(51) Int. Cl.⁴: **B 65 B 7/28,** B 65 B 51/14

(54) **VERFAHREN UND VORRICHTUNG ZUM VERSIEGELN VON SCHALENFOERMIGEN BEHÄLTERN MIT EINER FOLIE OD. DGL.**

(30) Priorität: **23.03.82 DE 3210566**

(43) Veröffentlichungstag der Anmeldung:
**04.04.84 Patentblatt 84/14**

(45) Bekanntmachung des Hinweises auf die Patenterteilung:
**26.02.86 Patentblatt 86/9**

(84) Benannte Vertragsstaaten:
**AT CH DE FR GB LI NL**

(56) Entgegenhaltungen:
**CH - A - 258 372**
**FR - A - 1 139 944**

(73) Patentinhaber: **Artusi, Aldo, Mühleboden 661, CH-8461 Trüllikon (CH)**
Patentinhaber: **Hagmann, Peter, Bielstrasse 95, CH-4500 Solothurn (CH)**

(72) Erfinder: **Artusi, Aldo, Mühleboden 661, CH-8461 Trüllikon (CH)**
Erfinder: **Hagmann, Peter, Bielstrasse 95, CH-4500 Solothurn (CH)**

(74) Vertreter: **Weiss, Peter, Schlachthausstrasse 1 Postfach 466, D-7700 Singen a.H. (DE)**

## Beschreibung

Die Erfindung betrifft ein Verfahren zum Versiegeln von schalenförmigen Behältern mit einer Folie oder dgl., wobei auf den Behälter mit aufgelegter Folie oder dgl. eine Heizeinrichtung mit Heizkörper gepreßt, die Heizeinrichtung an einem Träger angeordnet sowie zwischen Heizeinrichtung und Träger ein Werkstück eingeschaltet wird und zwischen Träger und Werkstück ein elektromagnetisches Feld aufgebaut wird, sowie eine Vorrichtung hierfür.

Bei üblichen Siegelvorrichtungen, wie beispielsweise in der WO 80/02 271 gezeigt, erfolgt die Absenkung des Heißsiegel-körpers entweder durch einen hydraulischen oder pneumatischen Antrieb; diese Maschinen weisen eine Gröne auf, welche auf einen hohen Durchsatz ausgelegt ist. Deshalb sind sie in der Regel nur in Industriebetrieben anwendbar, in denen eine große Anzahl von Behälter in einer bestimmten Zeiteinheit versiegelt werden muß.

Bekannt sind auch manuell betriebene Siegelvorrichtungen, bei denen der Heizkörper über einen Bügel und ein Gelenk auf den zu versiegelnden Behälter abgesenkt wird. Diese Maschinen gibt es auch im Kleinformat, beispielsweise für den Einzelhandel. Sie hat jedoch den Nachteil, daß weder die Zeitdauer des Druckes noch der Druck selber konstant gehalten wird, so daß die Siegelqualität nicht gleichbleibend ist. Zudem beeinträchtigen sie die Betriebs- bzw. Arbeitssicherheit. Weiterhin ist mit ihnen lediglich ein Druck von etwa 100 kg zu erzeugen.

Bei Konstruktionen von Maschinen, bei denen es auf das Bewegen eines Druckstempels oder dgl. ankommt, finden in der Regel Hubmagneten Anwendung. Soll die Druckleistung einer solchen Maschine beim Entfernen von Trägerplatte und der anderen Platte, zwischen denen beiden sich das elektromagnetische Feld aufbaut, gleich bleiben, muß die Hubeinrichtung eine bestimmte Größe aufweisen bzw. die angelegte Spannung laufend erhöht werden. Deshalb sind Maschinen mit Hubmagneten räumlich groß ausgelegt und kompliziert aufgebaut.

Anwendung finden auch Elektromagnete, wie beispielsweise nach der CH-A-258 372. Dort werden durch den Elektromagneten zwei heizbare Backen zueinander bewegt und dazwischen eingelegte Folienstreifen miteinander versiegelt. In der Praxis werden so Plastiktüten,beispielsweise für Gefriergut, verschlossen.

Diese Vorrichtung bzw. dieses Verfahren nach der CH-A-258 372 ist jedoch nicht anwendbar auf das Versiegeln von schalenförmigen Behältern mit einer Folie oder dgl. Durch den Preßdruck würde der schalenförmige Behälter zerstört. Angesichts dieser Gegebenheiten hat sich der Erfinder die Aufgabe gestellt, ein Verfahren und eine Vorrichtung zum Versiegeln auch von schalenförmigen Behältern zu entwickeln, wobei die Einrichtung erst durch einen zu versiegelnden Behälter in Gang gesetzt werden soll. Die Vorrichtung hierfür soll einfach und damit so kostengünstig wie möglich ausgestaltet sein sowie ein kleines Format aufweisen, damit sie auch beispielsweise im Einzelhandel eingesetzt zu werden vermag.

Zur Lösung dieser Aufgabe führt ein Verfahren der o.g. Art, bei dem der Behälter in einen Aufnahmeteil gelegt und an einer Schiene unter die Heizeinrichtung bewegt wird, wo ein Schalter betätigt wird, welcher den Aufbau des elektromagnetischen Feldes anregt.

Durch diese Ausgestaltung des erfindungsgemäßen Verfahrens wird auf einfache Weise bewirkt, daß die gesamte Einrichtung erst in Betrieb gesetzt wird, wenn der zu versiegelnde Behälter in die richtige Position gebracht ist. Dabei ist gleichzeitig das Einlegen des Behälters in den Aufnahmeteil außerhalb der Heizeinrichtung erleichtert. Eine Zerstörung eines schalenförmigen Behälters findet nicht statt.

Eine Verbesserung des erfindungsgemäßen Verfahrens sieht vor, daß über eine Zeitregeleinheit die Dauer des Pressens vom Heizkörper auf den Behälter sowie die Höhe der an die Antriebseinheit angelegten Spannung bestimmt wird. Auch kann über die Zeitregeleinheit nach Aufliegen des Heizkörpers auf dem Behälter die an der Antriebseinheit angelegte Spannung und damit der Preßdruck erhöht werden. Damit wird gewährleistet, daß der Heizkörper nicht bereits mit der vollen preßkraft beim Absenken auf den Aufnahmeteil aufschlägt und diesen beschädigt.

Bei einer entsprechenden Vorrichtung ist die Heizeinrichtung zwischen zwei von einer Traverse überspannten Säule angeordnet und unter dieser Heizeinrichtung eine Schiene zum Führen der Behälter in einem Aufnahmeteil sowie ein Schalter vorgesehen, welcher beim Betätigen durch den Behälter den Aufbau des elektromagnetischen Feldes anregt. Dabei besteht die Schiene einfachheitshalber aus einer Feder, welche mit einer Nut im Aufnahmeteil in Eingriff steht.

Da ein Haftmagnet der vorliegenden Art nur einer geringen räumlichen Auslegung bedarf, kann diese Vorrichtung im Kleinformat wirksam arbeiten. Träger und Werkstück bestehen der Einfachheit halber aus zwei Metallplatten, wobei an eine oder beide Spannung angelegt wird. Bei einem Durchmesser von etwa 10 cm konnte mit der Maschine ein Druck von etwa 400 kg erzeugt werden.

Bevorzugtermaßen sind Träger und Werkstück in zwei Teilen einer Schutzhülle aufgenommen, deren der Traverse ferner Teil den Träger enthaltend über den das Werkstück enthaltenden Teil, welches auf der Traversenoberseite festliegt, führbar ausgestaltet ist. Hierdurch wird einerseits die Antriebseinheit geschützt, ihre Bewegung aber nicht behindert.

Die Heizvorrichtung, welche zwischen den beiden Säulen auf und ab bewegbar ist, hängt bevorzugt an als Kraftspeicher ausgebildeten Schraubenfedern an der Traverse. Diese Kraftspeicher wirken der Anziehungskraft des elektromagnetischen Feldes entgegen. Im Rahmen der Erfindung liegt aber auch, daß diese Kraftspeicher entfallen und die Rückführung des Heizkörpers in die Ausgangslage durch Umpolen der Antriebseinrichtung erfolgt, so daß sich Träger und Werkstück ab-stoßen. Neben der Möglichkeit diese Machine in Kleinstformat herzustellen, sei auf die Einfachheit des Antriebs und damit auf die geringen Kosten hingewiesen. Dadurch wird es möglich, daß beispielsweise Einzelhandelsgeschäfte, welche nur eine geringe Anzahl von zu versiegelnden Behältern pro Tag benötigen, diese Maschine verwenden können.

Nach der vorliegenden Erfindung bedarf es also lediglich noch der manuellen Tätigkeit des Behältereinlegens, Folienabdeckens und Schieben unter die Heizvorrichtung. Der weitere Siegelvorgang erfolgt vollautomatisch. Hierzu sind Heizvorrichtung, die Antriebseinheit, der Druckschalter sowie ein Kippschalter, ein Transformator und eine Zeitregeleinheit in einem Regelkreis miteinander verbunden. Durch Einschalten des Kippschalters werden sowohl die Heizvorrichtung als auch — verbunden über den Transformator und die nachfolgende Zeitregeleinheit — die Antriebseinheit unter Strom gesetzt, wobei jedoch die Betätigung der Antriebseinheit erst durch Auslösung des Druckschalters erfolgt.

Wichtiger Bestandteil dieses Regelkreises ist auch die Zeitregeleinheit, welche die Dauer der Absenkung der Heizvorrichtung bestimmt. Bevorzugtermaßen soll sie eine Umschaltung aufweisen, welche nach dem Absenken der Heizvorrichtung auf den Behälter die Spannung in der Antriebseinheit erhöht und so den Preß-druck auf den Behälter verstärkt.

Die an die Antriebseinheit anzulegende Spannung richtet sich u. a. auch nach dem Werkstoff des aufzusiegelnden Gutes. Kunststoff benötigt hierbei einen geringeren Druck und damit eine geringere Spannung als beispielsweise Karton. Deshalb sieht die Erfindung einen Schalter vor, mittels welchem das Umschalten des Transformators auf eine höhere Ausgangsleistung erfolgen kann.

Die Heizvorrichtung ist bevorzugt mit zwei Heizpatronen bestückt.

Insgesamt weist die Maschine eine Länge von etwa 40 cm, eine Breite von etwa 30 cm und eine Höhe von etwa 40 cm auf.

Bevorzugtermaßen ist in eine Halterung für die Heizvorrichtung eine Gewindespindel eingeschraubt, an welcher am anderen Ende die Träger sowie eine Hutmutter aufgeschraubt ist. Durch Drehen der Hutmutter bzw. des Trägers kann der Abstand zwischen Träger und Werkstück verändert und damit die Tiefe der Absenkung der Heizvorrichtung variiert werden.

Weitere Vorteile, Merkmale und Einzelheiten der Erfin-dunß ergeben sich aus der nachfolgenden Beschreibung eines bevorzugten Ausführungsbeispiels sowie anhand der Zeichnung; diese zeigt in:

Fig. 1: eine Frontansicht einer Vorrichtung zum Versiegeln von Behälter;

Fig. 2: eine Seitenansicht der Vorrichtung nach Fig. 1;

Fig. 3: ein Blockschaltbild der VorrichtunS.

Fig. 4: einen teilweise gezeigten vergrößerten Querschnitt nach Linie IV-IV in Fig. 2.

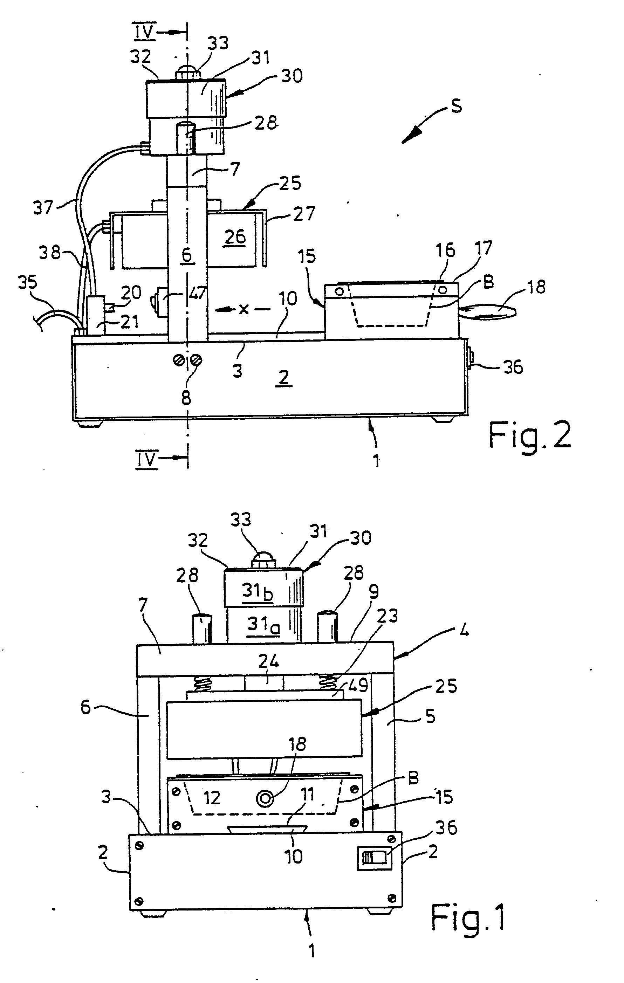

Eine Vorrichtung S, insbesondere zum Versiegeln von Behälter B — in Fig. 1 und 2 gestrichelt dargestellt — weist ein Traggehäuse 1 auf, an dessen Längsseiten 2 ein die Gehäuseoberseite 3 überspannendes torähnliches Gerüst 4 aus zwei Säulen 5 und 6 und einer Traverse 7 mittels Schrauben 8 festgelegt ist.

In der — nicht dargestellten — Längsachse des Gehäuses 1 ist auf der Gehäuseoberseite 3 eine Schiene 10 angeordnet, welche mit einer Nut 11 in Eingriff steht, die in den Boden 12 einer Schublade 15 eingeformt ist. In dieser Schublade 15 lagert der Behälter B, wobei dessen nach außen gebogene Öffnungsrandkanten 16 auf der Oberseite 17 der Schublade 15 aufliegen.

In der Schiene 10 und der Nut 11 geführt sowie an einem Knopf 18 gehalten, kann die Schublade 15 entlang der Längsachse des Gehäuses 1 bewegt werden. Wird sie in Richtung x (Fig. 2) verschoben, gelangt sie zwischen die beiden Säulen 5 und 6 des Gerüstes 4 und schlägt an einem Druckschalter 20 an, welcher an einem Stellblock 21 festgelegt ist.

Zwischen den beiden Säulen 5 und 6 hängt an zwei Schraubenfedern 23 und einem Vierkant 24 eine Halterung 49 für eine Heizvorrichtung 25, bestehend aus einem Heizkörper 26 und einer diesen übergreifenden nach unten offenen Verkleidung 27. Sowohl die Schraubenfedern 23 als auch der Vierkant 24 durchbohren die Traverse 7. Auf der Oberseite 9 der Traverse 7 sind die Schraubenfedern 23 in Hülsen 28 geführt und am Hülsenboden — nicht dargestellt — befestigt.

Zwischen den beiden Hülsen 28 sitzenden Antriebseinrichtung 30, deren Innenteile von einer Schutzhülle 31 umgeben sind, welche aus einem auf der Traverse 7 aufsitzenden unteren Teil $31_a$ sowie einem dieses übergreifenden oberen Teil $31_b$ besteht. Am Boden 32 des oberen Teils $31_b$ befindet sich eine Hutmutter 33.

Zum Versorgen der Vorrichtung S mit Energie ist eine Zuleitung 35 vorgesehen, welche zu einem Kippschalter 36 führt. Mit 37 ist eine Leitung zur Antriebseinrichtung 30 und mit 38 eine mit einer wärmebeständigen Ummantelung versehene Leitung zur Heizvorrichtung 25 bezeichnet.

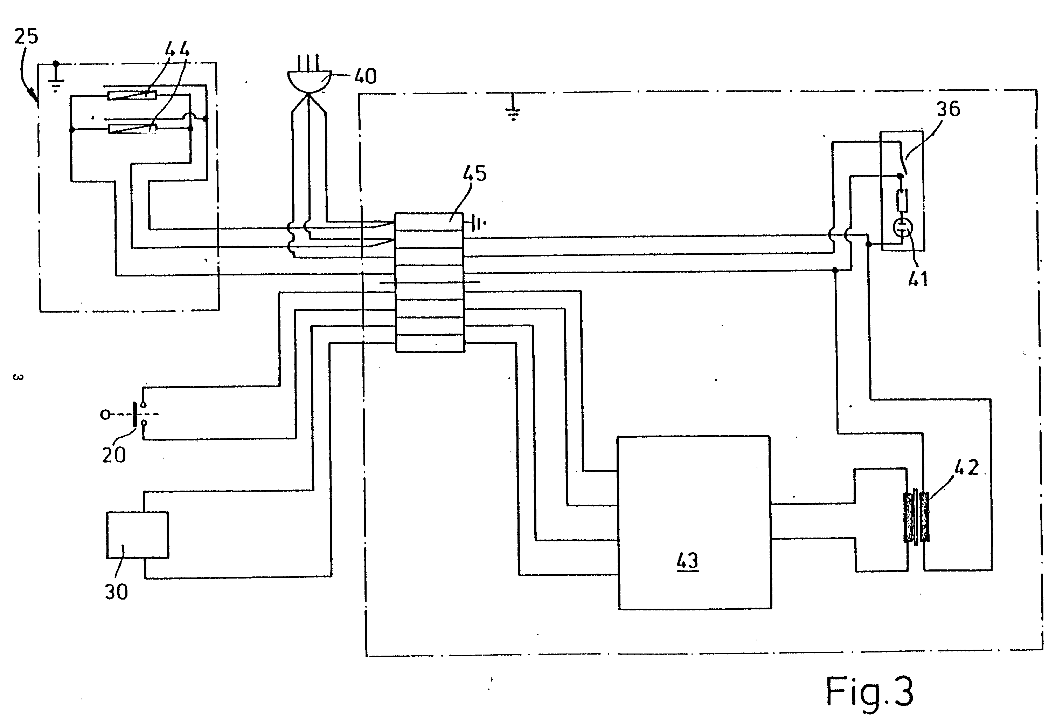

Aus dem Blockschaltbild gemäß Fig. 3 geht die Steuerung der Vorrichtung S hervor. Das übliche Stromnetz wird von einem Netzstecker 40 angezapft. Über den Kippschalter 36 mit eingebauter Glimmlampe 41 werden sowohl die Heizvorrichtung 25 als auch ein Transformator 42 sowie diesem nachfolgend ein Zeitregler 43 und die Antriebseinrichtung 30 mit Energie versorgt. Die Heizvorrichtung 25 beinhaltet beispielsweise zwei Heizpatronen 44 mit jeweils 600 W.

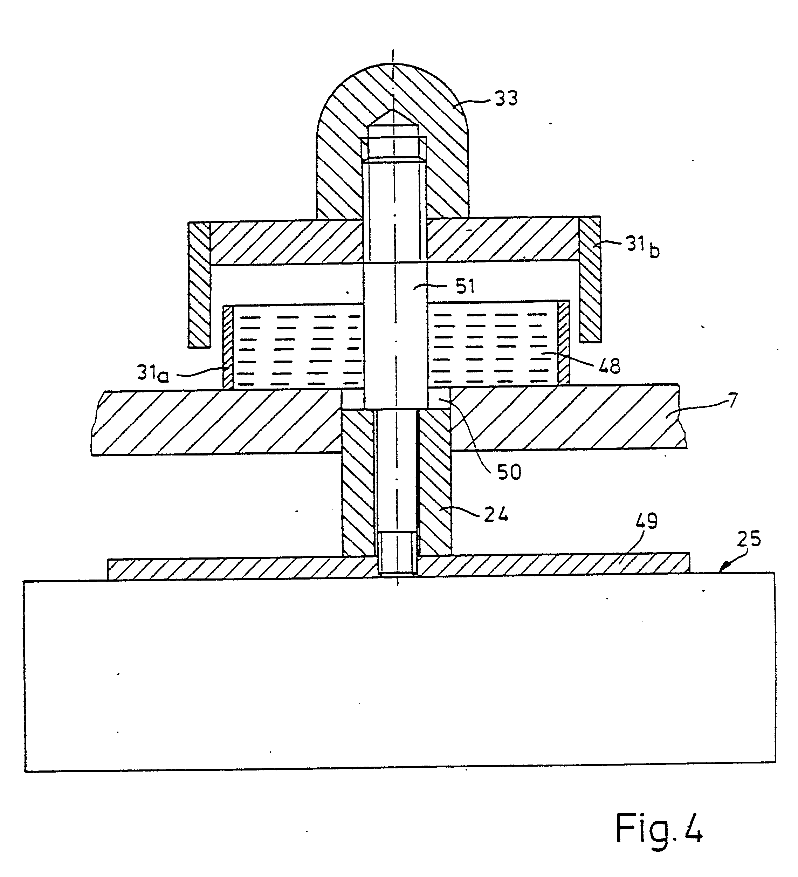

Bei Betätigung des Druckschalters 20 wird die Antriebseinrichtung 30 in Bewegung gesetzt. Diese Antriebseinrichtung 30 arbeitet mittels Elektromagneten. Dabei ist nach Fig. 4 auf der Traverse 7 eine magnetische Platte 48 angeordnet und durch — nicht dargestellte — Schrauben mit ihr verbunden. Der Magnet 48 weist mittig eine Öffnung 50 als Durchlaß für den Vierkant 24 auf, der über eine Gewindespindel 51 mit einer Stahlplatte 52 bzw. der Hutmutter 33 fest verbunden ist. Wird an diese Einrichtung Spannung angelegt, baut sich zwischen beiden Platten 48 und 52 ein elektromagnetisches Feld auf, wobei die obere Platte in dem beweglichen Teil $31_b$ der Schutzhülle 31 von dem an der Traverse 7 festliegenden Magnet 48 angezogen wird und der Vierkant in der Öffnung 50 an der Gewindespindel 51 hängend nach unten gleitet, wenn beide Magnetplatten unterschiedlich gepolt sind. Sind sie gleich gepolt, so stoßen sich beide Teile ab.

Die gesamte Verkabelung der einzelnen Teile ist an einer Zentralstelle 45 zusammengefaßt.

Danach arbeitet die Vorrichtung S wie folgt:

Nach Einschalten der Vorrichtung mittels des Kippschalters 36 werden sowohl die Heizvorrichtung 25 als auch die elektronischen Teile wie Transformator 42 und Zeitregler 43 mit Energie versorgt. Die Aufheizzeit des Heizkörpers 26 beträgt etwa 3 Minuten.

Danach wird ein zu versiegelnder Behälter B in die Schublade 15 eingelegt und mit einem aufzusiegelnden Deckel, beispielsweise einer Kunststoffolie oder einer Kartonplatte, versehen. Sodann wird die Schublade 15, an der Schiene 10 geführt, gegen den Stellblock 21 bewegt und der Druckschalter 20 betätigt.

Dieser Schalter 20 gibt einen Startimpuls an den Zeitregler 43. Dieser versorgt den Elektromagneten 48

mit Energie, z. B. mit einer

Spannung 12 V, und startet gleichzeitig seinen integrierten Zeitgeber. Das vom Elektromagneten erzeugte Magnetfeld wirkt gegen die Federkraft der Schraubenfedern 23, wobei sich die Heizvorrichtung 25 absenkt und sich die Teile $31_a$ und $31_b$ der Schutzhülle 31 übereinanderschieben. Sobald der Heizkörper 26 auf der Randkante 16 des Behälters B bzw. dem aufzusiegelnden Deckel aufsitzt, was nach einer vorbestimmten Zeit geschehen ist, wird die an den Elektromagneten angelegte Spannung über den Zeitregler 43 erhöht, wodurch der Druck des Heizkörpers 26 auf die mit dem aufzusiegelnden Deckel belegte Randkante 16 erhöht und der Behälter B geschlossen wird.

Nach Ablauf der durch den Zeitregler 43 vorbestimmten Siegelzeit (ca. 1 Sek.) schaltet dieser die Energiezufuhr zu den Elektromagneten ab und die Heizvorrichtung 25 wird durch die Kraftspeicher 23 in die Ausgangslage angehoben.

Die Schublade 15 kann nunmehr zurückgeschoben und der versiegelte Behälter entnommen werden.

Mit 47 ist ein weiterer Kippschalter bezeichnet, welcher der Umschaltung des Transformators 42 auf eine vorbestimmte höhere Ausgangsleistung dient.

**Patentansprüche**

1. Verfahren zum Versiegeln von schalenförmigen Behältern (B) mit einer Folie od.dgl., wobei auf den Behältern (B) mit aufgelegter Folie od.dg1. eine Heizeinrichtung (25) mit Heizkörper (26) gepreßt, die Heizeinrichtung (25) an einem Träger (52) angeordnet sowie zwischen Beizeinrichtung (25) und Träger (52) ein Werkstück (48) eingeschaltet wird und zwischen Träger (52) und Werkstück (48) ein elektromagnetisches Feld aufgebaut wird, dadurch gekennzeichnet, daß der Behälter in einen Aufnahmeteil (15) gelegt und an einer Schiene (10) unter die Heizeinrichtung (25) bewegt wird, wo ein Schalter (20) betätigt wird, welcher den Aufbau des elektromagnetischen Feldes anregt.

2. Verfahren nach Anspruch 1, dadurch gekennzeichnet, daß die Bewegung der Antriebseinheit (30) aus Werkstück (48) und Träger (52) durch eine Zeitregeleinheit (43) bestimmt wird.

3. Verfahren nach Anspruch 1 oder 2, dadurch gekennzeichnet, daß die Zeitregeleinheit (43) die Dauer des Pressens von Heizkörper (26) auf Behälter (B) sowie die Höhe der an die Antriebseinheit (30) angelegten Spannung bestimmt und/oder durch die Zeitregeleinheit (43) nach Aufliegen des Heizkörpers (26) auf den Behälter (B) die an der Antriebseinheit (30) angelegte Spannung und damit der Preßdruck erhöht wird.

4. Vorrichtung zum Versiegeln von schalenförmigen Behältern (B) mit einer Folie oder dgl., wobei auf den Behälter (B) mit aufgelegter Folie oder dgl. eine Heizeinrichtung (25) mit Heizkörper (26) preßbar, die Heizeinrichtung (25) an einem Träger (52) zwischen zwei von einer Traverse (7) überspannten Säulen (5,6) angeordnet sowie zwischen Heizeinrichtung (25) und Träger (52) ein Werkstück (48) eingeschaltet ist und zwischen Träger (52) und Werkstück (48) ein elektromagnetisches Feld aufbaubar ist, dadurch gekennzeichnet, daß unter der Heizeinrichtung (25) eine Schiene (10) zum Führen der Behälter (B) in einem Aufnahmeteil (15) und ein Schalter (20) angeordnet ist, welcher beim Betätigen durch den Behälter (B) den Aufbau des elektromagnetischen Feldes anregt.

5. Vorrichtung nach Anspruch 4, dadurch gekennzeichnet, daß die Schiene (10) aus einer Feder besteht, welche mit einer Nut (11) im Aufnahmeteil (15) in Eingriff steht.

6. Vorrichtung nach Anspruch 4 oder 5, dadurch gekennzeichnet, daß Träger und Werkstück als Antriebseinrichtung (30) in zwei Teilen (31a und 31b) einer Schutzhülle aufgenommen sind, deren der Traverse (7) ferner Teil (31b) den aus einer

Stahlplatte (52) bestehenden Träger enthaltend über den einen Magneten (48) als Werkstück enthaltenden Teil (31a), welcher auf der Traversenoberseite (9) festliegt, führbar ausgestaltet ist.

7. Vorrichtung nach einem der Ansprüche 4 bis 6, dadurch gekennzeichnet, daß der Abstand zwischen Stahlplatte (52) und Magnet (48) in der Ausgangslage mittels einer Gewindespindel (51) und einer Hutmutter (33) veränderbar ist und die Rückführung in die Ausgangslage durch Gleichpolung von Stahlplatte (52) und Magnet (48) erfolgt.

8. Vorrichtung nach einem der Ansprüche 4 bis 7, dadurch gekennzeichnet, daß die Heizeinrichtung (25), die Antriebseinheit (30), der Druckschalter (20) sowie ein Kippschalter (36), ein Transformator (42) und eine Zeitregeleinheit (43) in einem Regelkreis miteinander verbunden sind, wobei gegebenenfalls über den Kippschalter (36) sowohl die Heizeinrichtung (25) als auch verbunden über den Transformator (42) und die nachfolgende Zeitregeleinheit (43) die Antriebseinheit (30) an ein Stromnetz angeschlossen sind.

9. Vorrichtung nach Anspruch 8, dadurch gekennzeichnet, daß die Zeitregeleinheit (43) eine Umschalteinrichtung auf eine nach einer vorbestimmten Zeit erhöhte Spannung aufweist.

10. Vorrichtung nach wenigstens einem der Ansprüche 8 oder 9, dadurch gekennzeichnet, daß ein Schalter (47) zum Umschalten des Transformators (42) auf eine höhere Ausgangsleistung vorgesehen ist.

**Claims**

1. Process for sealing dish-shaped containers (B) with a foil or the like, a heating installation (25) with heating body (26) being pressed on to the containers (B) with the foil or the like applied, the heating installation (25) is arranged on a support (52), whilst between support (52) and the heating installation (25) is placed a workpiece (48) and between the support (52) and the workpiece (48) an electromagnetic field is built up, characterized in that the container is placed in a receiving part (15) and is moved on a rail (10) under the heating installation (25), where a switch is operated and starts the build up of the electromagnetic field.

2. Process according to claim 1, characterized in that the movement of the drive unit (30) of workpiece (48) and support (52) is determined by a time regulating unit (43).

3. Process according to claims 1 or 2, characterized in that the time regulating unit (43) determines the duration of the pressing of heating body (26) on container (B), as well as the level of the voltage applied to drive unit (30) and/or following the application of the heating body (26) to the container (B), the time regulating unit (43) increases the voltage applied to the drive unit (30) and consequently the pressing power.

4. Apparatus for sealing dish-shaped containers (B) with a foil or the like, a heating installation (25) with heating body (26) being pressed on to container (B) with applied foil or the like, the heating installation (25) being arranged on a support (52) between two columns (5, 6) spanned by a bar (7), whilst a workpiece (48) is inserted between heating installation (25) and support (52) and an electromagnetic field can be built up between support (52) and workpiece (48), characterized in that beneath the heating installation (25) a rail (10) for guiding container (B) is arranged in a receiving part (15) and a switch (20), which starts the build up of the electromagnetic field when operated by container (B).

5. Apparatus according to claim 4, characterized in that the rail (10) comprises a spring, which engages with a slot (11) in receiving part (15).

6. Apparatus according to claims 4 or 5, characterized in that the support and workpiece as drive unit (30) are received in two parts (31a, 31b) of a protective sleeve, whose part (31b) remote from bar (7) containing the support comprising a steel plate (52) is guided over part (31a) containing a magnet (48) as the workpiece and which is fixed on the top (9) of the bar.

7. Apparatus according to one of the claims 4 to 6, characterized in that the distance between the steel plate (52) and magnet (48) in the initial position is variable by means of a threaded spindle (51) and a cap nut (33) and the return to the initial position takes place by rendering steel plate (52) and magnet (48) homopolar.

8. Apparatus according to one of the claims 4 to 7, characterized in that the heating installation (25), drive unit (30), pushbutton switch (20), toggle switch (36), transformer (42) and time regulating unit (43) are interconnected in a control loop, the heating installation (25) and also the drive unit (30) connected via transformer (42) and the following time regulating unit (43) are optionally connected across the toggle switch (36) to a mains supply.

9. Apparatus according to claim 8, characterized in that the time regulating unit (43) has a switchover device to a voltage which is increased after a predetermined time.

10. Apparatus according to at least one of the claims 8 or 9, characterized in that a switch (47) is provided for switching the transformer (42) to a higher output.

**Revendications**

1. Procédé de fermeture hermétique de récipients creux B à l'aide d'une feuille ou de son équivalent dans lequel un dispositif de chauffage (25) avec corps de chauffe (26) sera appuyé sur le récipient B recouvert de la feuille dépliée, le système de chauffage (25) étant monté sur un support (52) de telle façon qu'un élément (48) sera placé entre le dispositif de chauffage (25) et le support (52) et qu'entre le support et cet élément, un champ magnétique sera crée, caractérisé par le fait, que le récipient sera placé dans un support (15) et déplacé le long d'une glissière (10) sous le dispositif de chauffage (25) où un commutateur (20) sera actionné déclenchant la formation du champ électromagnétique.

2. Procédé d'après la revendication 1, caractérisé par le fait que la mise en mouvement du système de déplacement (30) composé de support (52) et élément (48) sera réglée par un temporisateur (43).

3. Procédé d'après les revendications 1 ou 2 caractérisé par le fait que le temporisateur (43) détermine la durée de pression de l'élément chauffant (26) sur le récipient (B) ainsi que la valeur de la tension appliquée au système de mise en mouvement (30) et/ou Is tension appliquée au système de mise en mouvement (30) donnée par le temporisateur, et de ce fait la pression effectuée sur le récipient (B) sera augmentée, lorsque l'élément chauffant (26) reposera sur celui-ci.

4. Appareil destiné à sceller hermétiquement des récipients creux (B) â l'aide d'une feuille ou de son équivalent et où sur le récipient (B) muni de la feuille étalée ou de son équivalent, un dispositif de chauffage (25) avec corps de chauffe (26) peut se plaquer, ce dispositif (25) correspondant à un support (52) placé entre deux colonnes (5,6) reliées par une traverse (7) de telle façon qu'entre le dispositif de chauffage (25) et le support (52) se trouve un élément (48) et qu'un champ électromagnétique peut âtre crée entre ce support (52) et cet élément (48), caractérisé par le fait que sous le dispositif de chauffage (25) se trouve une glissière (10) servant à guider le recipient (B) placé dans un support (15), ainsi qu'un commutateur (20) lequel actionné par le recipient (B) commande la formation du champ électromagnétique.

5. Appareil caractérisé d'après la revendication 4, par le fait que la glissière (10) est constituée d'une lamelle sur laquelle vient s'engager le support (15) par l'intermédiaire d'une rainure (11).

6. Appareil caractérisé d'après les revendications 4 ou 5, par le fait que le support et l'élément correspondant constituant le dispositif de mise en mouvement (30 sont montrés dans un carter en deux parties (31a et 31b) et que la partie 31b contenant le support constitué d'une placé d'acier (52) est mobile et se trouve placée au dessus de la partie (31a) contenant l'élément constitué d'un aimant (4B), cette dernière étant fixée sur la partie supérieure de la traverse (7).

7. Appareil caractérisé d'après les revendications 4 à 6 par le fait que la distance entre la plaque d'acier (52) et l'aimant (48) est réglable dans sa position de départ au moyen d'un pivot fileté (51) et d'un écrou à capuchon (33) et que le retour dans la position de départ s'effectue par une alimentation électrique de mâme polarité de la plaque d'acier (52) et de l'aimant (48).

8. Appareil caractérisé d'après les revendications de 4 à 7 par le fait que le dispositif de chauffage (25), le système de mise en mouvement (30), le commutateur â poussoir (20) ainsi que l'interrupteur (36), le transformateur (42) et le temporisateur (43) sont reliés entr'eux par un circuit de réglage et que, le cas échéant, par l'intermédiaire de 1,in-terrupteur (36) aussi bien le dispositif de chauffage (25) que le temporisateur (43) et le système de mise en mouvement (30) reliés par l'intermédiaire du transformateur (42) seront alimentés en courant.

9. Appareil caractérisé d'après la revendication 8 par le fait que le temporisateur (43) présente un système de commutation sur une tension plus élevée au bout d'un temps préselectionné.

10. Appareil caractérisé au moina par l'une ou l'autre des revendications 8 ou 9, par le fait qu'il est prévu un commutateur (47) permettant l'enclenchement du transformateur (42) sur une tenaion de sortie plus élevée.

Fig.2

Fig.1

1

Fig.3

0 104 190

Fig.4